(19) **Europäisches Patentamt**
**European Patent Office**
**Office européen des brevets**

(11) **EP 3 471 044 A1**

(12) **EUROPEAN PATENT APPLICATION**
published in accordance with Art. 153(4) EPC

(43) Date of publication:
**17.04.2019 Bulletin 2019/16**

(51) Int Cl.:
**G06Q 30/02** (2012.01)

(21) Application number: **17805756.8**

(22) Date of filing: **26.05.2017**

(86) International application number:
**PCT/CN2017/086126**

(87) International publication number:
**WO 2017/206811 (07.12.2017 Gazette 2017/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.06.2016 CN 201610389956**

(71) Applicant: **Tencent Technology (Shenzhen)
Company Limited
Shenzhen, Guangdong 518057 (CN)**

(72) Inventors:
• **LI, Dongyu
Shenzhen,
Guangdong 518057 (CN)**

• **PENG, Zuojie
Shenzhen,
Guangdong 518057 (CN)**
• **LIU, Jie
Shenzhen,
Guangdong 518057 (CN)**
• **WANG, Chunhui
Shenzhen,
Guangdong 518057 (CN)**
• **SUN, Yu
Guangdong 518057 (CN)**
• **LI, Yiqun
Guangdong 518057 (CN)**

(74) Representative: **Eisenführ Speiser
Patentanwälte Rechtsanwälte PartGmbB
Postfach 31 02 60
80102 München (DE)**

(54) **INFORMATION PROCESSING METHOD, SERVER, AND NON-VOLATILE STORAGE MEDIUM**

(57) Disclosed in an embodiment of the invention are an information processing method, a server, and a non-volatile storage medium. The method comprises: obtaining first log information within a first time period; obtaining, on the basis of the first log information, terminal information associated with a terminal at which a click operation occurs in a media information displaying region; determining, on the basis of the terminal information, regional information corresponding to the terminal, wherein the regional information is used to indicate a region where the terminal is located; determining, according to the regional information, whether the number of regions where the terminal is located within a preset time range is greater than a first threshold; and if first terminal information indicating that the number of corresponding regions is greater than the first threshold is obtained on the basis of a determination result, determining that the terminal corresponding to the first terminal information is an abnormal terminal.

```
┌─────────────────────────────────────────┐
│ Obtain first log information in a first   │ 101
│ time period                               │
└─────────────────────────────────────────┘
                    │
                    ▼
┌─────────────────────────────────────────┐
│ Obtain, based on the first log            │
│ information, terminal information of a    │ 102
│ terminal on which a click behavior is     │
│ performed on a media information display  │
│ position                                  │
└─────────────────────────────────────────┘
                    │
                    ▼
┌─────────────────────────────────────────┐
│ Determine, based on the terminal          │
│ information, regional information          │ 103
│ corresponding to the terminal, the        │
│ regional information being used to        │
│ indicate a region in which the terminal   │
│ is located                                │
└─────────────────────────────────────────┘
                    │
                    ▼
┌─────────────────────────────────────────┐
│ Determine whether the number of regions   │
│ in which the terminal is located in a     │ 104
│ preset time range is greater than a       │
│ first threshold according to the          │
│ regional information                      │
└─────────────────────────────────────────┘
                    │
                    ▼
┌─────────────────────────────────────────┐
│ Obtain, based on a determining result,    │
│ first terminal information of which the   │
│ number of corresponding regions is        │ 105
│ greater than the first threshold, and     │
│ determining that a terminal corresponding │
│ to the first terminal information is an   │
│ abnormal terminal                         │
└─────────────────────────────────────────┘
```

**FIG. 2**

## Description

The application claims priority to Chinese Patent Application No. 201610389956.4, filed with the State Intellectual Property Office of People's Republic of China on June 2, 2016 and entitled "INFORMATION PROCESSING METHOD AND SERVER", which is incorporated herein by reference in its entirety.

## FIELD OF THE TECHNOLOGY

The present disclosure relates to the information processing technologies, and in particular, to an information processing method, a server, and a non-volatile storage medium.

## BACKGROUND OF THE DISCLOSURE

During display of media information (for example, an advertisement) on mobile terminals, cheating methods continuously escalate with development of anti-cheating methods, in order to pursue economic benefits. To increase income, a cheating party needs to report more clicks, for which the easiest way is to forge new users. Currently, the technical means for cheating mainly includes the following types. A first type is to forge terminal information by a technical means. The terminal information is, for example, an international mobile equipment identity (IMEI) or an Android ID in an Android system, or an Identifier for Advertising (IDFA) or a Media Access Control (MAC) address in an iOS system. With the forged terminal information, one mobile terminal may be recognized as multiple terminals. A second type is to obtain almost all Internet Protocol (IP) resources by technical means. A third type is to perform click behaviors of users by click simulation technologies.

In this way, by the three technical means described above and a combination thereof, cheating users cannot be accurately detected and recognized by using the existing anti-cheating detection policy. Consequently, the number of clicks of a media information display position cannot be accurately obtained. There is no effective solution to this issue in related technologies.

## SUMMARY

Embodiments of the present disclosure aim to provide an information processing method, a server, and a non-volatile storage medium, to resolve the issue in the conventional technology that cheating users who cheat in media information display cannot be accurately detected and recognized by a technical means against cheating in the conventional technology.

To achieve the foregoing objective, the technical solutions of the embodiments of the present disclosure are implemented as follows.

An information processing method is provided according to an embodiment of the present disclosure. The method includes:

obtaining first log information in a first time period;

obtaining, based on the first log information, terminal information of a terminal on which a click behavior is performed on a media information display position;

determining, based on the terminal information, regional information corresponding to the terminal, the regional information being used to indicate a region in which the terminal is located;

determining, according to the regional information, whether the number of regions in which the terminal is located in a preset time range is greater than a first threshold; and

obtaining, based on a determining result, first terminal information of which the number of corresponding regions is greater than the first threshold, and determining that a terminal corresponding to the first terminal information is an abnormal terminal.

A server is further provided according to an embodiment of the present disclosure. The server includes a data obtaining unit, a data analysis unit, and a determining unit.

The data obtaining unit is configured to obtain first log information in a first time period.

The data analysis unit is configured to: obtaining, based on the first log information, terminal information of a terminal on which a click behavior is performed on a media information display position; determining, based on the terminal information, regional information corresponding to the terminal, the regional information being used to indicate a region in which the terminal is located; determining whether the number of regions in which the terminal is located in a preset time range is greater than a first threshold.

The determining unit is configured to: obtain, based on a determining result obtained by the data analysis unit, first terminal information of which the number of corresponding regions is greater than the first threshold, and determine that a terminal corresponding to the first terminal information is an abnormal terminal.

A nonvolatile storage medium in which program instructions are stored is further provided according to an embodiment of the present disclosure. A processor performs an information processing method when executing the stored program instructions. The information processing method includes:

obtaining first log information in a first time period;

obtaining, based on the first log information, terminal information of a terminal on which a click behavior is performed on a media information display position;

determining, based on the terminal information, regional information corresponding to the terminal, the regional information being used to indicate a region in which the terminal is located;

determining, according to the regional information, whether the number of regions in which the terminal is located in a preset time range is greater than a first threshold; and

obtaining, based on a determining result, first terminal information of which the number of corresponding regions is greater than the first threshold, and determining that a terminal corresponding to the first terminal information is an abnormal terminal.

The information processing method, the server, and the non-volatile storage medium are provided according to the embodiments of the present disclosure. The method includes: obtaining first log information in a first time period; obtaining, based on the first log information, terminal information of a terminal on which a click behavior is performed on a media information display position; determining, based on the terminal information, regional information corresponding to the terminal, where the regional information is used to indicate a region in which the terminal is located; determining whether the number of regions in which the terminal is located in a preset time range is greater than a first threshold according to the regional information; and obtaining, based on a determining result, first terminal information of which the number of corresponding regions is greater than the first threshold, and determining that a terminal corresponding to the first terminal information is an abnormal terminal. By means of the technical solutions of the embodiments of the present disclosure, information about a terminal on which a click behavior is performed on a media information display position and corresponding regional information are analyzed, and a terminal whose number of regions is greater than a first threshold is determined to be an abnormal terminal. Therefore, an issue in the conventional technology that cheating users who cheat in media information display cannot be accurately detected and recognized by a technical means against cheating is resolved, and accuracy of the number of clicks on the media information display position is greatly improved.

**BRIEF DESCRIPTION OF THE DRAWINGS**

To describe the technical solutions of the embodiments of this application more clearly, the accompanying drawings required for describing the embodiments are briefly introduced in the following. Apparently, the accompanying drawings in the following description show only some embodiments of this disclosure, and a person of ordinary skill in the art may still derive other drawings from these accompanying drawings without creative efforts.

FIG. 1 is a schematic diagram of hardware entities of parties that perform information exchange according to an embodiment of the present disclosure;

FIG. 2 is a flowchart of an information processing method according to a first embodiment of the present disclosure;

FIG. 3 is a flowchart of an information processing method according to a second embodiment of the present disclosure;

FIG. 4 is a graph of normal numbers of clicks on a media information display position according to an embodiment of the present disclosure;

FIG. 5a and FIG. 5b are schematic diagrams of abnormal numbers of clicks on a media information display position according to an embodiment of the present disclosure;

FIG. 6 is a scatter chart of distribution of a day-to-night ratio of the number of clicks on a media information display position according to an embodiment of the present disclosure;

FIG. 7a to FIG. 7c are schematic diagrams of distributions of locations of clicks on the media information display position;

FIG. 8 is a schematic diagram of a proportional relationship between a percentage of abnormal terminals and the number of advertisement positions according to an embodiment of the present disclosure;

FIG. 9 is a schematic diagram of a processing process of the information processing method according to an embodiment of the present disclosure;

FIG. 10 is a schematic diagram of a processing process of the information processing method in an application scenario according to an embodiment of the present disclosure;

FIG. 11 is a schematic diagram of a first configuration of a server according to an embodiment of the present disclosure;

FIG. 12 is a schematic diagram of a second configuration of a server according to an embodiment of the present disclosure;

FIG. 13 is schematic diagram of a modular structure of a server according to an embodiment of the present disclosure; and

FIG. 14 is a diagram of an example in which the server is a hardware entity according to an embodiment of the present disclosure.

## DESCRIPTION OF EMBODIMENTS

In the following, the present disclosure is described in detail with reference to the accompanying drawings and embodiments.

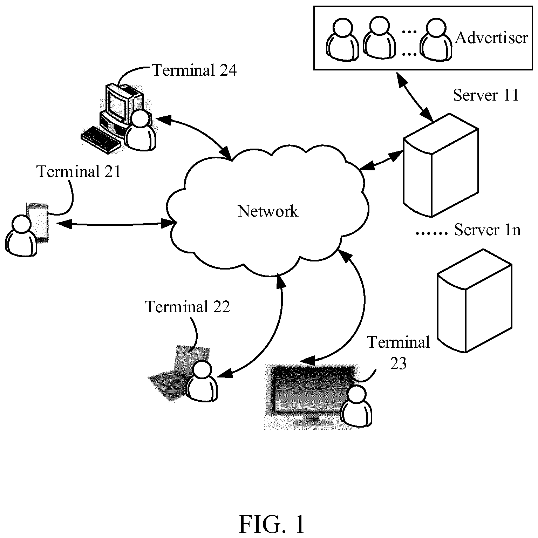

FIG. 1 is a schematic diagram of hardware entities of parties that perform information exchange according to embodiments of the present disclosure. Servers 11 to In and terminal devices 21 to 24 are shown in FIG. 1. The terminal devices 21 to 24 perform information exchange with the servers by using a wired network or a wireless network. The terminal device may include a mobile phone, a desktop computer, a personal computer, and an all-in-one machine. In an example, the server may interact with a first-type terminal by using a network. The first-type terminal may be, for example, a terminal of an advertiser, or may be referred to as an object that provides advertisement materials and content promotion. After the first-type terminal submits a to-be-published advertisement, the advertisement is stored in a server or a server cluster. A skilled person may be provided to perform a series of processing such as examining the advertisement provided by the first-type terminal. Relative to the first-type terminal, the terminal devices 21 to 24 may be referred to as second-type terminals. The second-type terminal may be, for example, a terminal of a normal user, or may be referred to as an object to which the advertisement is exposed or presented. The second-type terminal may be, for example, a user that views a video by using a video application, or a user that uses a social application. Advertisements may be presented to users by using all applications or specified applications (for example, a game application, a video application, and a navigation application) installed on the terminal device, to recommend information to the user.

In this embodiment, there are two types of servers. The first-type server is used for providing traffic for media information publication, and is referred to as a traffic party in this embodiment. The first-type terminal (for example, a terminal of an advertiser) needs to purchase traffic from the first-type server (for example, the traffic party), to publish media information using the purchased traffic. The second-type server is used for performing cheating detection on the above behaviors, to prevent the traffic party from increasing the number of clicks on the media information by a cheating means and damaging the interest of the advertiser. The information processing method in this embodiment is applied to the above second-type server or the server cluster.

First Embodiment

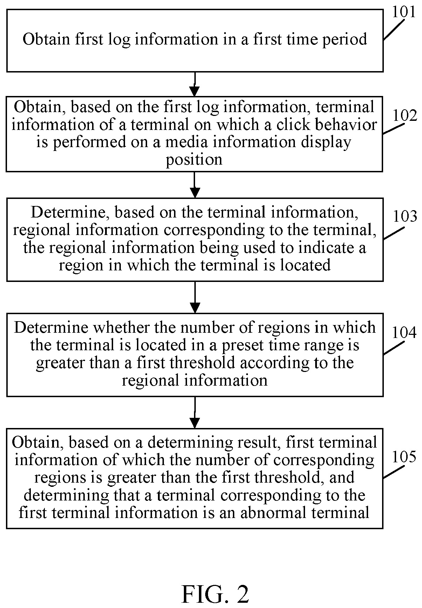

An information processing method is provided according to this embodiment of the present disclosure. FIG. 2 is a flowchart of an information processing method according to a first embodiment of the present disclosure. As shown in FIG. 1, the method includes the following steps 101 to 105.

In step 101: first log information in a first time period is obtained.

In step 102, terminal information of a terminal on which a click behavior is performed on a media information display position is obtained based on the first log information.

In step 103, regional information corresponding to the terminal is determined based on the terminal information. The regional information is used to indicate a region in which the terminal is located.

In step 104, it is determined whether the number of regions in which the terminal is located in a preset time range is greater than a first threshold according to the regional information.

In step 105, first terminal information of which the number of corresponding regions is greater than the first threshold is obtained based on a determining result, and it is determined that a terminal corresponding to the first terminal information is an abnormal terminal.

The information processing method in this embodiment of the present disclosure is applied to a media information publishing system. Content of the media information is, for example, content of an advertisement.

The information processing method in this embodiment is for a technical means for cheating for forging users in the conventional technology. In the conventional technology, users are forged by changing an IP address in combination with changing terminal information. It is found by the inventor that, for example, the terminal information is an IMEI, the IMEI and the IP address are discrete if the IMEI and the IP address are considered in separated dimensions. However, if the IMEI and the IP address are considered in combination with each other, and the IP address is corresponded to a region in which a terminal is located (the region may be accurate to a municipal-level, and the like), in a normal case, within a short period of time (for example, one hour), a normal terminal is fixed in a certain region, and it is a small probability event that the terminal occurs in multiple regions. Therefore, in data manifestation, a case in which an IMEI correspond to multiple regions within a short period of time needs to be found, and the terminal corresponding to this IMEI may be a forged terminal.

Table 1 shows distribution of regions in which all IMEIs in a media information publishing platform occur in one hour. As shown by the collected statistics, approximately 97% of IMEIs only occur in only one region, a small amount of IMEIs, approximately 2%, occur in two regions, and less than 1 % of IMEIs occur in at least two regions within one hour. One IMEI occurs in up to 261 different regions (not shown).

Table 1

| Number of regions where IMEI occurs | Number of IMEIs | Percentage |
|---|---|---|
| Equal to 1 | 513457 | 97.78% |
| Equal to 2 | 10530 | 2.00% |
| Greater than 2 | 1127 | 0.22% |

It may be seen that within each hour, there is a very small probability, approximately 0.22%, that one IMEI occurs in three regions or more than three regions. It may be considered that within a preset time range (for example, one hour) if the number of regions in which one piece of terminal information occurs is greater than a first threshold, it may be determined that the terminal information is forged by forging the terminal information in combination with changing an IP address, and the terminal is an abnormal terminal. The first threshold may be 2. Based on this, in this embodiment, terminal information in a media information pushing platform and corresponding regional information are obtained, and the regional information may be specifically represented as a municipal-level region range. If the number of regions corresponding to the first terminal information in a time range less than a preset time range (for example, one hour) is greater than the first threshold (for example, 3), it may be determined that a first terminal corresponding to the first terminal information is an abnormal terminal.

In this embodiment, the first log information is log information in a relatively short time range. In an implementation, the first log information may be hour-level log information, for example, one-hour log information. Certainly, the first log information is not limited to the hour-level log information, and may be minute-level log information, and the like. The first log information includes all information obtained by a media information pushing platform, which includes a click behavior on a media information display position, terminal information, user information, and information about a position at which a terminal is located.

By means of the technical solutions of the embodiments of the present disclosure, information about a terminal on which a click behavior is performed on a media information display position and corresponding regional information are analyzed, and a terminal whose number of regions is greater than a first threshold is determined to be an abnormal terminal. Therefore, an issue in the conventional technology that cheating users who cheat in media information display cannot be accurately detected and recognized by a technical means against cheating is resolved, and accuracy of the number of clicks on the media information display position is greatly improved. On the other hand, the benefits of a media information publishing party (for example, an advertiser) are protected.

Second Embodiment

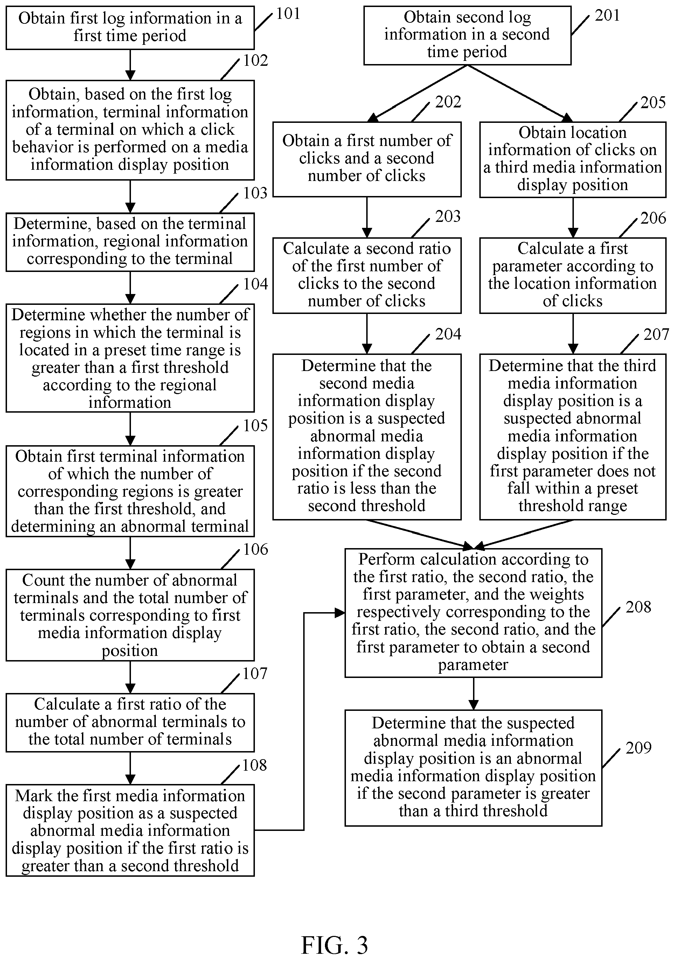

An information processing method is further provided according to an embodiment of the present disclosure. Based on the information processing solution in the first embodiment, based on a recognized abnormal terminal, and in combination with second log information in a longer time range, the information processing solution in this embodiment is mainly used for recognizing an abnormal media information display position. FIG. 3 is a flowchart of an information processing method according a second embodiment of the present disclosure. As shown in FIG. 3, after step 105 in the first embodiment, the information processing method includes the following steps 106 to 209.

In step 106, the number of abnormal terminals and the total number of terminals corresponding to a first media information display position among media information display positions corresponding to the abnormal terminals are counted. The first media information display position is any one of the media information display positions corresponding to the abnormal terminal.

In step 107, a first ratio of the number of abnormal terminals to the total number of terminals is calculated.

In step 108, the first media information display position is marked as a suspected abnormal media information display position if the first ratio is greater than a second threshold. Then, the method proceeds to step 208.

In step 201, second log information in a second time period is obtained. A time range of the second time period is greater than a time range of the first time period.

step 202, a first number of clicks on a second media information display position in a first preset time range and a second number of clicks on the second media information display position in a second preset time range are obtained based on the second log information. The first preset time range and the second preset time range are different. Specifically, the first preset time range may be used for representing a time range during the day; and the second preset time range may be used for representing a time range during the night.

In step 203, a second ratio of the first number of clicks to the second number of clicks is calculated.

In step 204, the second media information display position is determined to be a suspected abnormal media information display position if the second ratio is less than the second threshold. Then the method proceeds to step 208.

In step 205, location information of clicks on a third media information display position is obtained based on the second log information.

In step 206, a first parameter is calculated according to the location information of clicks, where the first parameter indicates a distribution of locations of clicks on the third media information display position.

In step 207, it is determined that the third media information display position is a suspected abnormal media information display position if the first parameter does not fall within a preset threshold range. Then, the method proceeds to step 208.

In step 208, calculation is performed according to the first ratio, the second ratio, the first parameter, and weights respectively corresponding to the first ratio, the second ratio, and the first parameter, to obtain a second parameter corresponding to the suspected abnormal media information display position.

In step 209, it is determined that the suspected abnormal media information display position is an abnormal media information display position if the second parameter is greater than a third threshold.

In this embodiment, it is considered that the traffic party cheats for obtaining a higher amount of publishing fee from a media information publisher (for example, an advertiser). Therefore, most traffic parties will increase the number of clicks on media information to the greatest extent by a cheating means. Manifestation of click behaviors on media information by using a cheating technology is different from manifestation of normal click behaviors on media information. One of the differences lies in that, to maximize the benefits, the traffic party clicks the media information regardless of day and night, which is inconsistent with a normal behavior.

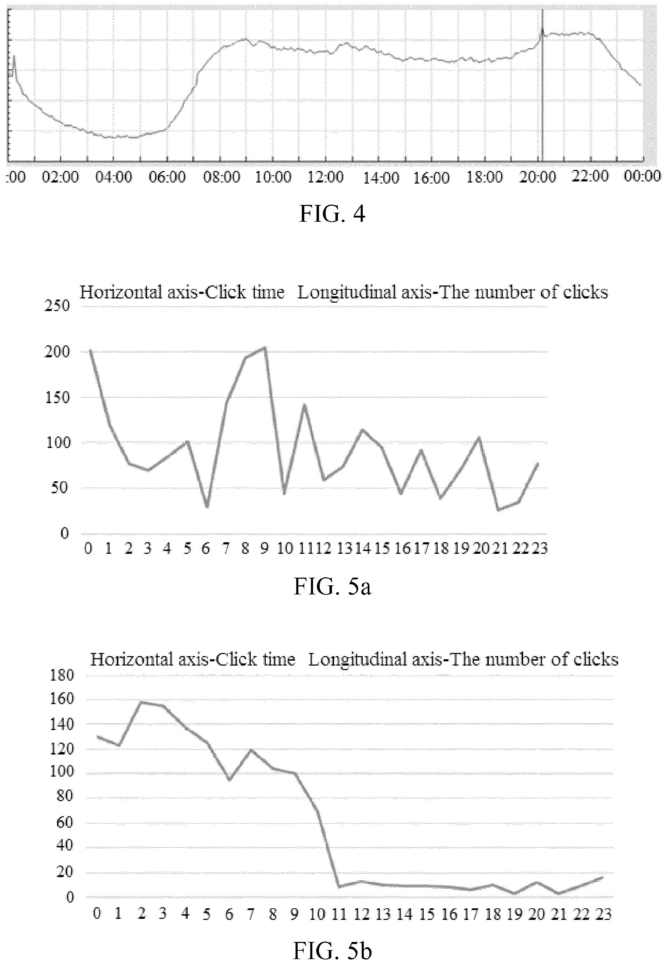

FIG. 4 is a graph of normal numbers of clicks on a media information display position according to an embodiment of the present disclosure. As shown in FIG. 4, it may be seen that between 2 o'clock to 6 o'clock in the morning, the number of click behaviors on the media information display position is relatively small, and from 8 o'clock in the morning, the number of click behaviors on the media information display position gradually increases to the highest level of the day. At about 23 o'clock in the night, the number of click behaviors on the media information display position falls. It may be seen that the click behaviors on the media information display position is related to a schedule of the user. During the day, the user is not in a sleeping state, and a probability that the user generates a click behavior on the media information display position is far greater than a probability that the user generates a click behavior on the media information display position in the night when the user sleeps.

Based on this, click behaviors on the media information display position which do not have a distinction between the day and the night as shown in FIG. 3, that is, which are generated regardless of the day and the night, are considered as a small probability event from the perspective of statistics.

FIG. 5a and FIG. 5b are schematic diagrams of abnormal numbers of clicks on a media information display position according to an embodiment of the present disclosure. It may be seen that curves of the abnormal numbers of clicks shown in FIG. 5a and FIG. 5b are different from the curve of a normal number of clicks on the media information display position shown in FIG. 4. Specifically, as shown in FIG. 5a, although the number of clicks on the media information display position fluctuates, the number of clicks does not have a distinction during the day and the night, and it may be considered that the number of clicks on the media information display position during one day is evenly distributed. As shown in FIG. 5b, the number of clicks on the media information display position are all at relatively high values after 0 o'clock in the night and before 7 o'clock in the morning, and gradually decrease from 7 o'clock in the morning and are close to a lowest level at 11 o'clock in the morning, which is completely inconsistent with the distribution of normal click behaviors on the media information display position shown in FIG. 4. From this, it may be considered that these click behaviors generated on the media information display position are manually intervened, and have a suspicion of cheating.

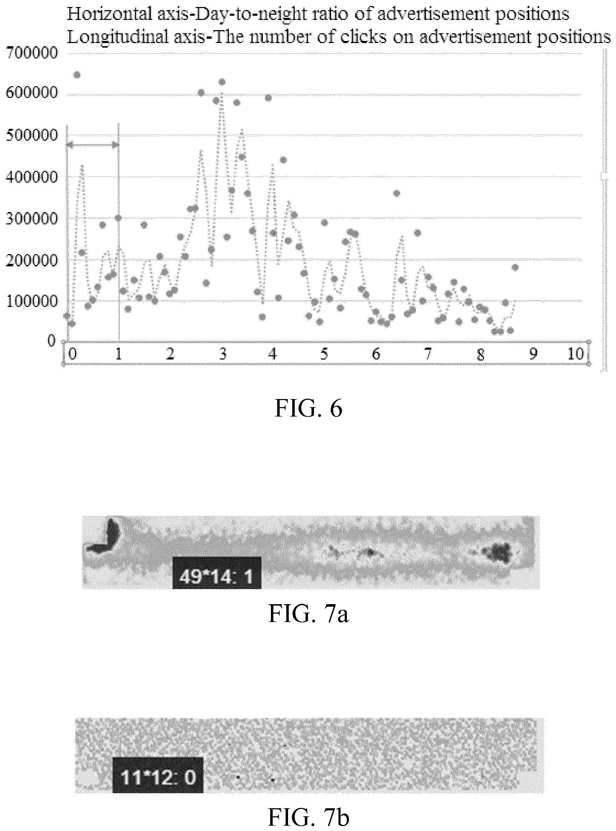

According to a distribution of normal click behaviors on the media information display position shown in FIG. 4, in step 202 to step 204 in this embodiment, several representative time periods may be selected to represent the day and the night. For example, "night" (a time period in which a user is asleep) may be defined as a time period from 0 o'clock in the night to 8 o'clock in the morning, and "day" (a time period in which a user is awake) may be defined as a time period from 8 o'clock in the morning to 0 o'clock in the night. Certainly, in this embodiment, "day" is a first preset time range, which indicates a time period in which a user is awake, and "night" is a second preset time range, which indicates a time period in which a user is asleep. In this embodiment, a first number of clicks on the second media information display position in the first preset time range and a second number of clicks on the second media information display position in the second preset time range are counted. The second media information display position is any media information display position in a media information pushing platform. A second ratio of the first number of clicks to the second number of clicks is calculated. If the second ratio is less than a second threshold, it is determined that the second media information display position is a suspected abnormal media information display position. The second threshold is a value less than or equal to 1, and the second ratio being less than the second threshold indicates that the number of clicks on the second media information display position during the "day" is less than the number of clicks on the second media information display position during the "night". Specifically, as shown in FIG. 6, the part of which the horizontal coordinate is less than 1 indicates advertisement positions that are more active in the night than in the day. The vertical coordinate represents the number of advertisement positions. It may be seen that some advertisement positions are active in the night. Except some special applications, a large part of advertisement positions are cheating advertisement positions.

In this embodiment, a second difference lies in that, the location at which a media information display position clicked by each user is reported by using a software development kit (SDK), and a service end determines a distribution of coordinates of clicks on each media information display position. It may be found though statistical analysis that the distribution of locations of clicks on the media information display position by a cheating means is different from that of a normal media information display position.

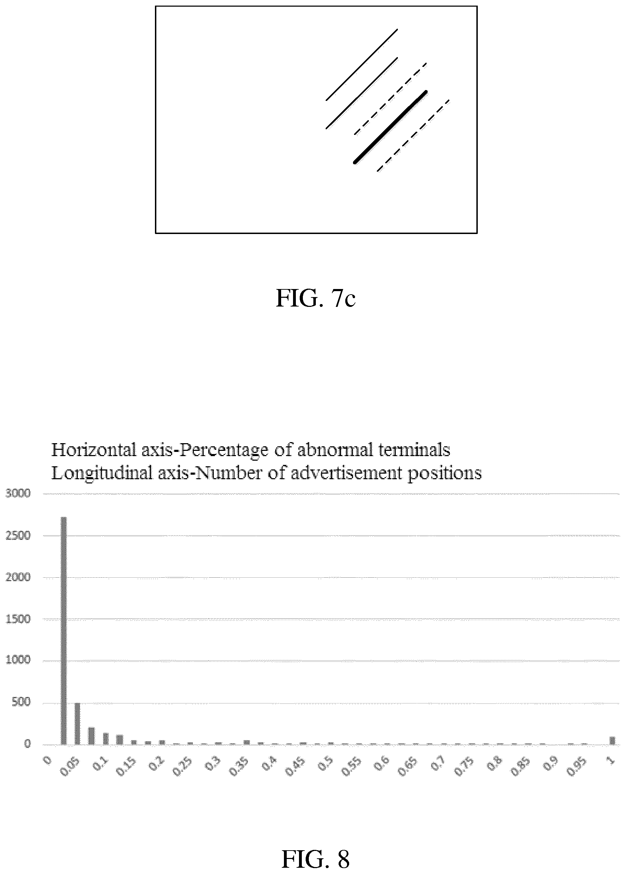

FIG. 7a to FIG. 7c are schematic diagrams of distributions of locations of clicks on a media information display position. FIG. 7a is a schematic diagram of distribution of locations of clicks on a normal media information display position. As shown in FIG. 7a, the distribution of the locations of clicks on the normal media information display position includes hot spots according to the format and content of media information. For example, coordinates of the media information display positions in some region are in scattered distribution, and the media information display position in some regions are more focused by the user, and coordinates thereof are in a concentrated distribution. Distribution of locations of clicks on an abnormal media information display position may be as shown in FIG. 7b and FIG. 7c. Because click behaviors on the media information display position by a cheating means are generate in a programmed fixed mode, and the locations of clicks present a particular profile. Based on data analysis, locations of clicks on the abnormal media information display position usually present a scattered distribution or a concentrated distribution. For details, reference is made to FIG. 7b and FIG. 7c. FIG. 7b represents locations of clicks in scattered distribution. FIG. 7c represents locations of clicks in concentrated distribution. The thickness or line type of lines in FIG. 7c indicate different numbers of clicks. The line type may include a solid line or a dashed line. For example, a thin solid line indicates a first number of clicks, a bold solid line indicates a second number of clicks, and a dashed line indicates a third number of clicks.

Based on the foregoing description, in step 205 to step 207 in this embodiment, a first parameter is calculated according to location information of clicks on the third media information display position. The first parameter indicates a distribution of locations of clicks on the third media information display position. If the first parameter does not meet a preset condition, it is determined that the third media information display position is a suspected abnormal media information display position. The first parameter may be represented by an entropy value, that is, the media information display position of the media information is recognized by using an entropy algorithm.

Specifically, for a case in which locations of clicks on the abnormal media information display position are in a scattered distribution, as shown in FIG. 7b, coordinate points are evenly distributed seen from a horizontal direction and a vertical direction. Therefore, if it can be determined in the horizontal direction or the vertical direction that the coordinate points are evenly distributed, it can be determined that the locations of clicks are in a scattered distribution, that is, it is determined that locations of clicks on the media information display position are abnormal. In a case that interval ranges of the horizontal direction and the vertical direction are given, a maximal entropy value may be obtained in even distribution. Evenness of distribution of clicks is described by using an entropy value. For example, in the horizontal direction, a calculation method is as follows:

$$H(x) = -\sum p(x)\log(p(x)) \qquad (1)$$

where x represents a horizontal coordinate of a location of a click; p (x) represents a probability when the horizontal coordinate of the location of the click is x; and H (x) represents an entropy value of locations of clicks on the media information display position.

On the other hand, for a case that locations of clicks on an abnormal media information display position are in a concentrated distribution, as shown in FIG. 7c, when the value of a horizontal coordinate x is fixed, selectivity of the value of a longitudinal coordinate y is small. That is, given a horizontal coordinate x, the uncertainty of the longitudinal coordinate y is relatively small. This may be represented by using condition entropy, as follows:

$$H(Y|X) = -\sum p(x,y)\log\frac{p(x,y)}{p(x)} = \sum p(x,y)\log\frac{p(x)}{p(x,y)} \qquad (2)$$

where x and y respectively represent a horizontal coordinate and a longitudinal coordinate of a location of a click; p(x) represents a probability of the location of the click when the horizontal coordinate is x; p(x, y) represents a probability of the location of the click when the horizontal coordinate is x, and the longitudinal coordinate is y; and H(Y|X) represents an entropy value of locations of clicks on the media information display position.

Based on the foregoing entropy calculation method, the first parameter is calculated for locations of clicks on each media information display position. The first parameter may be specifically an entropy value. For different types of media information display positions (the types are, for example, a banner advertisement and an interstitial advertisement), corresponding preset threshold ranges are respectively set. If the calculated first parameter (for example, the entropy value) of the media information display position does not fall within the preset threshold range, it may be determined that the media information display position is a suspected abnormal media information display position. For example, for an interstitial advertisement position, an entropy value of approximately 8 bits may be considered to represent an even distribution under certain cases, and is suspected of cheating. That is, it may be determined that the interstitial advertisement position is a suspected abnormal media information display position.

In this embodiment, a third difference lies in that, for an abnormal terminal recognized in the first embodiment, assuming that an advertisement position has 100 clicks each day, and 10% of the clicks are performed by such an IMEI, a probability of the occurrence of the event may be roughly estimated according to the following equation: P = $(0.0022)^{10} \times (0.9978)^{90}$. P is a value that is infinitely close to 0, which indicates that such a case is an extremely small probability event. If in traffic of an advertisement position, there are a great number of such IMEIs that occur in multiple regions, the possibility that the advertisement position is a cheating advertisement position is great. Distribution in FIG. 8 also proves this. In a normal advertisement position, abnormal terminals account for a very small percentage. For example, for approximately 2600 to 2700 advertisement positions among 3,000 advertisement positions, less than 5% of terminals on which the advertisement positions are clicked are abnormal terminals. In some advertisement positions, the percentage of abnormal terminals exceeds 10%. In approximately 100 advertisement positions, 100% of the terminals on which the advertisement position are clicked are abnormal terminals.

Based on the foregoing description, in step 105 to step 107 in this embodiment, among the media information display positions corresponding to the abnormal terminals, the number of abnormal terminals and the total number of terminals corresponding to the first media information display position are counted. The first media information display position is any one of the media information display positions corresponding to the abnormal terminals. The first ratio of the number of abnormal terminals to the total number of terminals is calculated. If the first ratio is greater than the second threshold, the first media information display position is marked as a suspected abnormal media information display position.

Based on the suspected abnormal media information display position marked according to the foregoing three methods, that is, the second ratio obtained based on the click behavior during the day and the night, the first parameter obtained based on the distribution of locations of clicks, and the first ratio obtained based on the abnormal terminal (that is, the user dimension), a second parameter corresponding to an abnormal media information display position is calculated according to respective preset weights. The weight corresponding to the first parameter may be relatively great. The parameters are respectively multiplied by corresponding weights and are added, to obtain the second parameter. It is determined whether the second parameter is greater than the third threshold. If the second parameter is greater than the third threshold, it is determined that the first suspected abnormal media information display position is an abnormal media information display position.

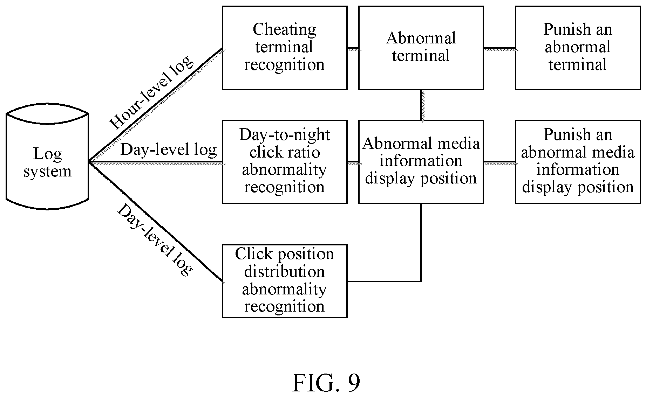

FIG. 9 is a schematic diagram of a processing process of the information processing method according to an embodiment of the present disclosure. As shown in FIG. 9, log information in a log system is obtained, and the obtained log information includes an hour-level log and a day-level log. Specifically, the hour-level log may be, for example, the first log information in this embodiment, and the day-level log may be, for example, the second log information in this embodiment. On one hand, a cheating terminal is recognized based on the hour-level log, and an abnormal terminal is determined according to the method in the first embodiment. Further, after the determining that a terminal corresponding to the first terminal information is an abnormal terminal, the method further includes: marking a click behavior on the media information display position corresponding to the abnormal terminal as invalid. On the other hand, a cheating media information display position (for example, an advertisement position) is recognized based on the day-level log, and an abnormal media information display position is determined according to the method in the second embodiment. Further, after the determining the first suspected abnormal media information display position as an abnormal media information display position, the method further includes: marking a click behavior on the abnormal media information display position as invalid.

By means of the technical solution in this embodiment of the present disclosure, on one hand, the terminal information that performs a click behavior on the media information display position and corresponding regional information are analyzed, and a terminal of which the number of regions is greater than a first threshold is determined as an abnormal terminal. On the other hand, a ratio of the number of clicks during the day to the number of clicks during the night of the media information display position, and a distribution of locations of clicks are analyzed, so as to recognize an abnormal media information display position. In this way, issues in the conventional technology that cheating users who cheat in media information display cannot be accurately detected and recognized by a technical means against cheating, and that the number of clicks on the media information display position cannot be accurately counted, are solved, thereby greatly improving the accuracy of the number of clicks on the media information display position, and protecting the benefits of a media information publishing party (for example, an advertiser).

The information processing method in the embodiments of the present disclosure is described in detail below by using a specific application scenario of advertisement display.

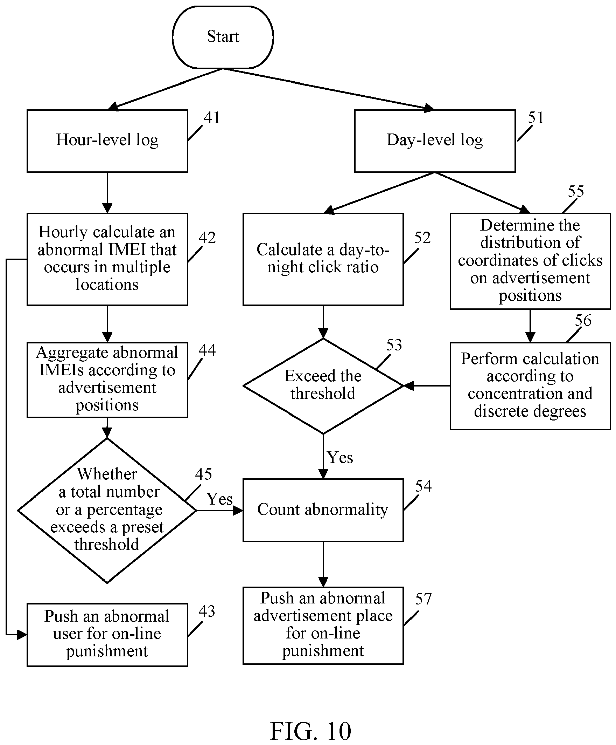

FIG. 10 is a schematic diagram of a processing process of the information processing method in an application scenario according to an embodiment of the present disclosure. As shown in FIG. 10, the information processing solution in this application scenario includes two parts: an abnormal user recognition and punishment process which includes step 41 to step 43; and an abnormal advertisement position recognition and punishment process which includes step 51 to step 57, and step 44, and step 45 to step 54. An abnormal user recognition and punishment process includes the following steps 41 to 43.

In step 41, hour-level log information is obtained.

Specifically, the server may set a timer for timing one hour. Each time when the timer expires, IMEIs and corresponding address information in one hour in the log system are obtained.

In step 42, abnormal IMEIs that occurs in multiple locations are hourly calculated.

After hour-level log information is obtained, for each IMEI, regional information in which the IMEI occurs in the last hour is counted. If it is determined that the number of regions in which an IMEI occurs in one hour reaches a preset threshold, it is determined that the IMEI is an abnormal IMEI. The preset threshold may be 3.

In step 43, an abnormal user is pushed for on-line punishment.

Specifically, a terminal corresponding to the abnormal IMEI is determined to be an abnormal terminal. This may also be understood as that a user corresponding to an abnormal IMEI is determined to be an abnormal user. The pushing the abnormal user for on-line punishment includes: marking a click behavior corresponding to the abnormal terminal as invalid.

An abnormal advertisement position recognition and punishment process includes three parts. In the first part, a suspected abnormal advertisement position is determined by recognizing a percentage of the number of clicks of abnormal users on the advertisement position. In the second part, a suspected abnormal advertisement position is determined by recognizing a day-to-night click number ratio of the advertisement position. In the third part, a suspected abnormal advertisement position is determined by using a distribution of coordinates at which the advertisement position is clicked. A final abnormal advertisement position is determined from suspected abnormal advertisement positions determined in the foregoing three manners, which includes the following step 44 to step 57.

In step 44, abnormal IMEIs are aggregated according to advertisement positions, and among clicks on the advertisement position, the number of abnormal users and the total number of users are counted.

In step 45, it is determined whether a percentage of the number of abnormal users to the total number of users exceeds a preset threshold; and if it is determined that the percentage of the number of abnormal users to the total number of users exceeds the preset threshold, it is determined that the advertisement position is a suspected abnormal advertisement position, and the suspected abnormal advertisement position is pushed to step 54 for abnormal advertisement position determining.

Specifically, according to the analysis and description in the second embodiment, among clicks on a normal advertisement position, the percentage of abnormal users is very small; and if the percentage of abnormal users is relatively great among clicks on a certain advertisement position, it may be determined that the advertisement position is a suspected abnormal advertisement position.

In step 51, a day-level log is obtained.

Specifically, the server may obtain log information of a previous day at a fixed time instant each day.

In step 52, a day-to-night click number ratio of each advertisement position is calculated based on the obtained day-level log.

In step 53, it is determine whether the day-to-night click number ratio exceeds a preset threshold; and if it is determined that the day-to-night click number ratio exceeds the preset threshold, it may be determined that the advertisement position is a suspected abnormal advertisement position, and the suspected abnormal advertisement position pushed to step 54 for abnormal advertisement position determining.

In step 55, the distribution of coordinates of clicks on the advertisement position is determined based on the obtained day-level log.

In step 56, a parameter indicating a concentration degree and a discrete degree of coordinates of clicks are calculated. Then the method proceeds to step 54.

Specifically, the calculated parameter indicating the concentration degree and the discrete degree of coordinates of clicks may be determined by calculating entropy of the coordinates of clicks on the advertisement positions.

In step 53, it is determined whether the parameter is greater than a preset threshold. If it is determined that the parameter is greater than the preset threshold, it may be determined that the advertisement position is a suspected abnormal advertisement position, and the suspected abnormal advertisement position is pushed to step 54 for abnormal advertisement position determining. Certainly, when step 53 is performed herein, the preset threshold for comparison is different from the preset threshold for comparison for the day-to-night click number ratio.

In step 54, abnormal advertisement position determining is performed for the suspected abnormal advertisement positions determined in the foregoing three manners. Specifically, weights may be respectively pre-configured for the suspected abnormal advertisement positions determined in the foregoing three manners. The suspected abnormal advertisement positions determined in the foregoing three manners respectively correspond to three parameters: a second ratio indicating a day-to-night click number ratio obtained based on click behaviors during the day and the night, a first parameter indicating a concentration degree or a discrete degree of coordinates of clicks obtained based on a distribution of locations of clicks, and a first ratio indicating a ratio of the number of abnormal users to the total number of users obtained based on an abnormal terminal (that is, a user dimension). The parameters are respectively multiplied by corresponding weights, and are added, to obtain a final result. If the final result is greater than a preset threshold, it may be determined that the suspected abnormal advertisement position is an abnormal advertisement position.

In step 57, an abnormal advertisement position is pushed for on-line punishment.

Specifically, the pushing an abnormal advertisement position for on-line punishment includes: marking a click behavior corresponding to the abnormal advertisement position as invalid.

Third Embodiment

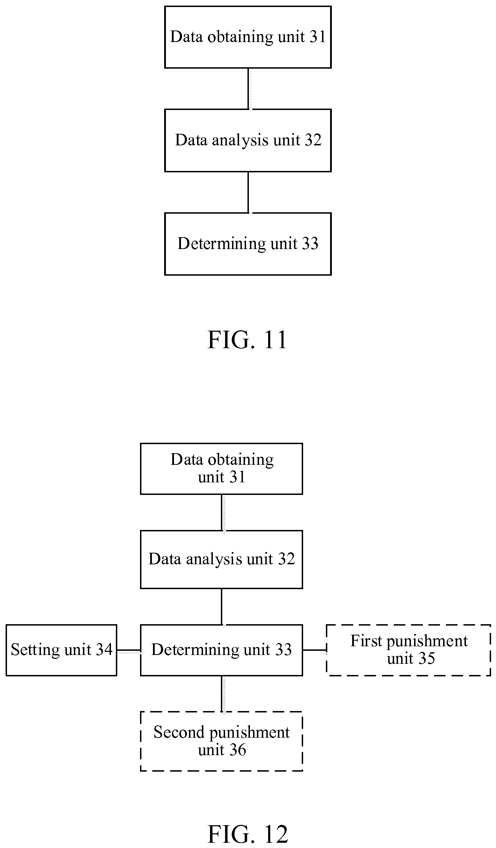

Based on the first embodiment, a server is provided according to an embodiment of the present disclosure. FIG. 11 is a schematic diagram of a first configuration of a server according an embodiment of the present disclosure. As shown in FIG. 11, the server includes: a data obtaining unit 31, a data analysis unit 32, and a determining unit 33.

The data obtaining unit 31 is configured to obtain first log information in a first time period.

The data analysis unit 32 is configured to: obtain, based on the first log information, terminal information of a terminal on which a click behavior is performed on a media information display position; determine, based on the terminal information, regional information corresponding to the terminal, the regional information being used to indicate a region in which the terminal is located; and determine whether the number of regions in which the terminal is located in a preset time range is greater than a first threshold.

The determining unit 33 is configured to: obtain, based on a determining result obtained by the data analysis unit 32, first terminal information of which the number of corresponding regions is greater than the first threshold, and determine that a terminal corresponding to the first terminal information is an abnormal terminal.

In this embodiment, the first log information is log information in a relatively short time range. In an implementation, the first log information may be hour-level log information, for example, one-hour log information. Certainly, the first log information is not limited to the hour-level log information, and may be minute-level log information. The first log information includes all information obtained by a media information pushing platform, which includes a click behavior on a media information display position, terminal information, user information, and information about a location at which a terminal is located.

In this embodiment, based on the description of the first embodiment, the data analysis unit 32 obtains the terminal information and corresponding regional information in the media information pushing platform. The regional information may be specifically represented by a municipal-level regional range. If the number of regions corresponding to the first terminal information in a time range less than a preset time range (for example, one hour) is greater than the first threshold, the determining unit 33 may determine that a first terminal corresponding to the first terminal information is an abnormal terminal. The first threshold may be 3.

In an implementation, the server further includes a first punishment unit 35, configured to: after the determining unit 33 determines that the terminal corresponding to the first terminal information is an abnormal terminal, mark a click behavior corresponding to the abnormal terminal on the media information display position as invalid.

A person skilled in the art should understand that, functions of all processing units in the server in the embodiment of the present disclosure may be understood by referring to the related description of the foregoing information processing method, and all processing units in the server in the embodiment of the present disclosure may be implemented by using an analog circuit for implementing the functions in the embodiments of the present disclosure, or may be implemented by running software for executing the functions in the embodiments of the present disclosure on an intelligent terminal.

Fourth embodiment

Based on the second embodiment, this embodiment of the present disclosure further provides a server is further provided according to an embodiment of the present disclosure. FIG. 12 is a schematic diagram of a second configuration of a server according to an embodiment of the present disclosure. As shown in FIG. 12, the server includes: a data obtaining unit 31, a data analysis unit 32, a determining unit 33, and a setting unit 34.

The data obtaining unit 31 is configured to obtain first log information in a first time period.

The data analysis unit 32 is configured to: obtain, based on the first log information obtained by the data obtaining unit 31, terminal information of a terminal on which a click behavior is performed on a media information display position; determine, based on the terminal information, regional information corresponding to the terminal, the regional information being used to indicate a region in which the terminal is located; and determine whether the number of regions in which the terminal is located in a preset time range is greater than a first threshold. The data analysis unit 32 is further configured to: count the number of abnormal terminals and the total number of terminals corresponding to a first media information display position among media information display positions corresponding to abnormal terminals, where the first media information display position is any one of the media information display positions corresponding to the abnormal terminals; and calculate a first ratio of the number of abnormal terminals to the total number of terminals.

The determining unit 33 is configured to: obtain, based on a determining result obtained by the data analysis unit 32, first terminal information of which the number of corresponding regions is greater than the first threshold, and determine that a terminal corresponding to the first terminal information is an abnormal terminal. The determining unit 33is further configured to mark the first media information display position as a suspected abnormal media information display position if the first ratio is greater than a second threshold.

The data obtaining unit 31 is further configured to obtain second log information in a second time period, where a time range of the second time period is greater than a time range of the first time period.

The data analysis unit 32 is further configured to: obtain, based on the second log information, a first number of clicks on a second media information display position in a first preset time range and a second number of clicks on the second media information display position in a second preset time range, where the first preset time range and the second preset time range are different; and calculate a second ratio of the first number of clicks to the second number of clicks. The data analysis unit 32 is further configured to: obtain, based on the second log information, location information of clicks on a third media information display position; calculate a first parameter according to the location information of clicks on the third media information display position, where the first parameter indicates a distribution of locations of clicks on the third media information display position; and determine whether the first parameter falls within a preset threshold range.

The determining unit 33 is further configured to determine the second media information display position as a suspected abnormal media information display position if the second ratio is less than the second threshold; and is further configured to determine that the third media information display position is a suspected abnormal media information display position if the first parameter does not fall within the preset threshold range.

The setting unit 34 is configured to respectively set weights for the first ratio, the second ratio, and the first parameter.

The determining unit 33 is further configured to: perform calculation according to the first ratio, the second ratio, the first parameter, and weights respectively corresponding to the first ratio, the second ratio, and the first parameter, to obtain a second parameter corresponding to the suspected abnormal media information display position; and determine that the suspected abnormal media information display position is an abnormal media information display position if the second parameter is greater than a third threshold.

In this embodiment, the data obtaining unit 31 obtains the first log information and the second log information. The first log information is log information in a relatively short time range. In an implementation, the first log information may be hour-level log information, for example, one-hour log information. Certainly, the first log information is not limited to hour-level log information and may be minute-level log information. A time range of the second log information is greater than a time range of the first log information. Relative to the first log information, the second log information has a relatively longer time range. In an implementation, the second log information may be day-level log information. Certainly, the second log information is not limited to log information in a range of one day, and may be log information in a range of ten days.

Based on the description of the second embodiment, in a first aspect, the data analysis unit 32 analyzes, based on the second log information, the first number of clicks in the first preset time range (that is, the number of clicks during the day) on the media information display position and the second number of clicks in the second preset time range (that is, the number of clicks during the night) on the media information display position, and calculate a ratio of the number of clicks during the day to the number of clicks during the night. The determining unit 33 is further configured to determine the corresponding media information display position as a suspected abnormal media information display position if the ratio is less than the second threshold.

According to a second aspect, the data analysis unit 32 analyzes, based on the second log information, location information of clicks on the media information display position, and calculates the first parameter (that is, an entropy value) based on the location information of clicks on the media information display position. The determining unit 33 is further configured to determine that the third media information display position is a suspected abnormal media information display position if the first parameter (that is, the entropy value) does not fall within the preset threshold range.

In a third aspect, the data analysis unit 32 analyzes the media information display position related to the abnormal terminal determined by the determining unit 33, and calculates a ratio of the number of abnormal terminals to the total number of terminals corresponding to the media information display position. If the ratio is greater than the second threshold, the determining unit 33 marks the first media information display position as a suspected abnormal media information display position.

In combination with the foregoing three aspects, the determining unit 33 calculates, based on the weights set by the setting unit 34, a second parameter corresponding to the abnormal media information display position. The weight value corresponding to the first parameter may be relatively great; and the parameters are respectively multiplied by the corresponding weights and are added together to finally obtain the second parameter. It is determined whether the second parameter is greater than the third threshold. If the second parameter is greater than the third threshold, it is determined that the first suspected abnormal media information display position is an abnormal media information display position.

In an implementation, the server further includes a first punishment unit 35, configured to: after the determining unit 33 determines that the terminal corresponding to the first terminal information is an abnormal terminal, mark a click behavior corresponding to the abnormal terminal on the media information display position as invalid.

In an implementation, the server further includes a second punishment unit 36, configured to: after the determining unit 33 determines that the suspected abnormal media information display position is an abnormal media information display position, mark a click behavior on the abnormal media information display position as invalid.

A person skilled in the art should understand that, functions of all processing units in the servers in the embodiments of the present disclosure may be understood by referring to the related description of the foregoing information processing method, and all processing units in the servers in the embodiments of the present disclosure may be implemented by using an analog circuit for implementing the functions in the embodiments of the present disclosure, or may be implemented by running software for executing the functions in the embodiments of the present disclosure on an intelligent terminal.

In the third embodiment and the fourth embodiment of the present disclosure, the data obtaining unit 31, the data analysis unit 32, the determining unit 33, the setting unit 34, the first punishment unit 35, and the second punishment unit 36 in the server all may be implemented by using a central processing unit (CPU), a digital signal processor (DSP), a microcontroller unit (MCU), or a field programmable gate array (FPGA) in the server during actual application.

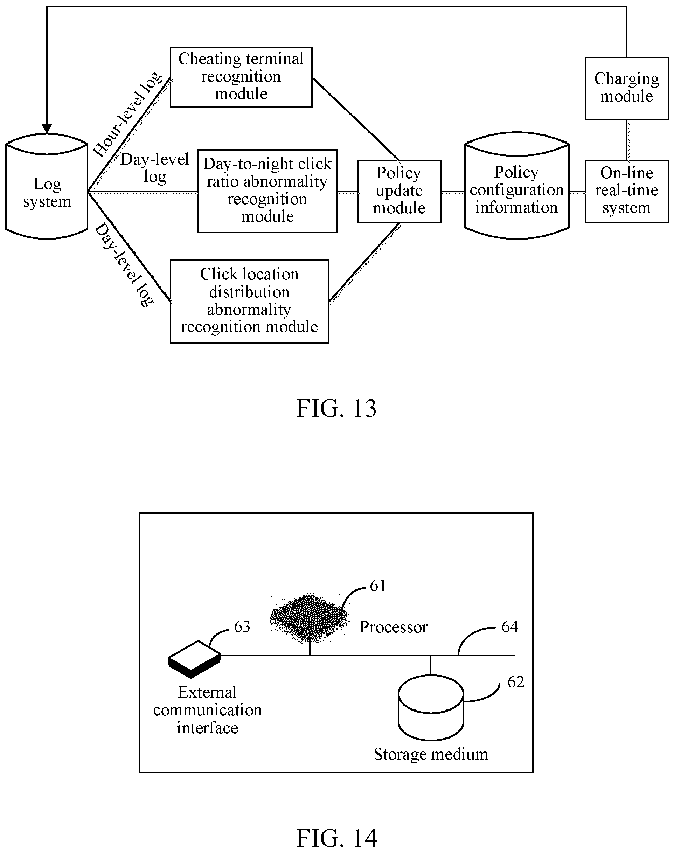

FIG. 13 is a schematic diagram of a modular structure of a server according to an embodiment of the present disclosure. As shown in FIG. 13, log information is obtained by using a cheating terminal recognition module and a day-to-night click ratio abnormality recognition module, a click location distribution abnormality recognition module in a log system. The cheating terminal recognition module obtains hour-level log information. The day-to-night click ratio abnormality recognition module and the click location distribution abnormality recognition module respectively obtain day-level log information. A policy update module is configured with a cheating determining policy according to policy configuration information. The cheating terminal recognition module, the day-to-night click ratio abnormality recognition module and the click location distribution abnormality recognition module perform analysis and recognition according to the cheating determining policy in the policy update module. The policy update module obtains an abnormal terminal and an abnormal media information display position (that is, an abnormal advertisement position). After an on-line real-time system receives a request from a charging module, the on-line real-time system gives a punishment according to an obtained determining result, and marks a click behavior performed by an abnormal terminal as invalid and marks a click behavior on an abnormal media information display position as invalid. Meanwhile, the charging module does not charge for the click behavior recorded as invalid.

In the embodiments, an example in which a server is a hardware entity is shown in FIG. 14. The server includes a processor 61, a storage medium 62, and at least one external communications interface 63. The processor 61, the storage medium 62, and the external communications interface 63 are connected to each other by using a bus 64.

It needs to be pointed out that, the foregoing description related to the server is similar to the description of the method, and the description of beneficial effects of the server is the same as that of the method, and is not repeated herein. For technical details that are not disclosed in the server embodiments of the present disclosure, reference can be made to the description of the method embodiments of the present disclosure.

In the several embodiments provided in the present application, it should be understood that the disclosed apparatus and method may be implemented in other manners. The described device embodiments are merely exemplary. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections between the components may be implemented through some interfaces, indirect couplings or communication connections between the devices or units, or electrical connections, mechanical connections, or connections in other forms.

The units described as separation parts may be or may not be physically separated. The part used as display unit may be or may not be a physical unit. That is, the units may be located in a same place, or may be distributed to many network units. Some or all of the units need to be selected according to actual requirements to implement the purpose of the solution of the embodiments.

In addition, functional units in the embodiments of the present disclosure may be all integrated in a processing unit, each unit is separately used as a unit, or two or more units are integrated in a unit. The integrated unit may be implemented in a form of hardware, or may be implemented in form of hardware plus a software functional unit.

A person of ordinary skill in the art may understand that, some or all of steps for implementing the method embodiments may be implemented by instructing related hardware by using a program. The program may be stored in a computer readable storage medium. When the program is executed, the steps including the method embodiments are performed. The storage medium includes various types of media that may store program code, for example, a mobile storage device, a read-only memory (ROM), a random access memory (RAM), a magnetic disk, or an optical disk.

Alternatively, in the present disclosure, if implemented in the form of software functional modules and sold or used as independent products, the integrated modules may be stored in a computer-readable storage medium. Based on such an understanding, the technical solutions of the embodiments of the present disclosure essentially, or the part contributing to the prior art may be implemented in a form of a software product. The computer software product is stored in a storage medium and includes several instructions for instructing a computer device (which may be a personal computer, a server, a network device, or the like) to perform all or some of the methods described in the embodiments of the present disclosure. The foregoing storage medium includes: any media that can store program code, such as a removable storage device, a ROM, a RAM, a magnetic disk, or an optical disc.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1.  An information processing method, comprising:

    obtaining first log information in a first time period;
    obtaining, based on the first log information, terminal information of a terminal on which a click behavior is performed on a media information display position;

determining, based on the terminal information, regional information corresponding to the terminal, wherein the regional information is used to indicate a region in which the terminal is located;

determining, according to the regional information, whether the number of regions in which the terminal is located in a preset time range is greater than a first threshold; and

obtaining, based on a determining result, first terminal information of which the number of corresponding regions is greater than the first threshold, and determining that a terminal corresponding to the first terminal information is an abnormal terminal.

2. The method according to claim 1, wherein the method further comprises:

counting the number of abnormal terminals and the total number of terminals corresponding to a first media information display position among media information display positions corresponding to abnormal terminals, wherein the first media information display position is any one of the media information display positions corresponding to the abnormal terminals;

calculating a first ratio of the number of abnormal terminals to the total number of terminals; and

marking the first media information display position as a suspected abnormal media information display position if the first ratio is greater than a second threshold.

3. The method according to claim 2, wherein the method further comprises:

obtaining second log information in a second time period, wherein a time range of the second time period is greater than a time range of the first time period;

obtaining, based on the second log information, a first number of clicks on a second media information display position in a first preset time range and a second number of clicks on the second media information display position in a second preset time range, wherein the first preset time range and the second preset time range are different;

calculating a second ratio of the first number of clicks to the second number of clicks; and

determining the second media information display position as a suspected abnormal media information display position if the second ratio is less than the second threshold.

4. The method according to claim 3, wherein after the obtaining second log information, the method further comprises:

obtaining, based on the second log information, location information of clicks on a third media information display position;

calculating a first parameter according to the location information of clicks, wherein the first parameter indicates a distribution of locations of clicks on the third media information display position; and

determining that the third media information display position is a suspected abnormal media information display position if the first parameter does not fall within a preset threshold range.

5. The method according to claim 4, further comprising:

respectively setting weights for the first ratio, the second ratio, and the first parameter;

performing calculation according to the first ratio, the second ratio, the first parameter, and weights respectively corresponding to the first ratio, the second ratio, and the first parameter, to obtain a second parameter corresponding to the suspected abnormal media information display position; and

determining that the suspected abnormal media information display position is an abnormal media information display position if the second parameter is greater than a third threshold.

6. The method according to claim 1, wherein after the determining that the terminal corresponding to the first terminal information is an abnormal terminal, the method further comprises: marking a click behavior corresponding to the abnormal terminal on the media information display position as invalid.

7. The method according to claim 5, wherein after the determining that the suspected abnormal media information display position is the abnormal media information display position, the method further comprises: marking a click behavior on the abnormal media information display position as invalid.

8. A server, comprising:

a data obtaining unit configured to obtain first log information in a first time period;

a data analysis unit configured to: obtain, based on the first log information, terminal information of a terminal on which a click behavior is performed on a media information display position; determine, based on the terminal information, regional information corresponding to the terminal, the regional information being used to indicate a region in which the terminal is located; and determine whether the number of regions in which the terminal is located in a preset time range is greater than a first threshold; and

a determining unit configured to: obtain, based on a determining result obtained by the data analysis unit, first terminal information of which the number of corresponding regions is greater than the first threshold, and determine that a terminal corresponding to the first terminal information is an abnormal terminal.

9. The server according to claim 8, wherein the data analysis unit is further configured to:

count the number of abnormal terminals and the total number of terminals corresponding to a first media information display position among media information display positions corresponding to abnormal terminals, wherein the first media information display position is any one of the media information display positions corresponding to the abnormal terminals; and calculate a first ratio of the number of abnormal terminals to the total number of terminals; and

the determining unit is further configured to: mark the first media information display position as a suspected abnormal media information display position if the first ratio is greater than a second threshold.

10. The server according to claim 9, wherein the data obtaining unit is further configured to obtain second log information in a second time period, wherein a time range of the second time period is greater than a time range of the first time period;

the data analysis unit is further configured to: obtain, based on the second log information, a first number of clicks on a second media information display position in a first preset time range and a second number of clicks on the second media information display position in a second preset time range, wherein the first preset time range and the second preset time range are different; and calculate a second ratio of the first number of clicks to the second number of clicks; and

the determining unit is further configured to determine the second media information display position as a suspected abnormal media information display position if the second ratio is less than the second threshold.

11. The server according to claim 10, wherein the data analysis unit is further configured to:

obtain, based on the second log information, location information of clicks on a third media information display position; calculate a first parameter according to the location information of clicks, wherein the first parameter indicates a distribution of locations of clicks on the third media information display position; and determine whether the first parameter falls within a preset threshold range; and

the determining unit is further configured to determine that the third media information display position is a suspected abnormal media information display position if the first parameter does not fall within the preset threshold range.

12. The server according to claim 11, further comprising:

a setting unit, configured to respectively set weights for the first ratio, the second ratio, and the first parameter; and the determining unit is further configured to: perform calculation according to the first ratio, the second ratio, the first parameter, and weights respectively corresponding the first ratio, the second ratio, and the first parameter, to obtain a second parameter corresponding to the suspected abnormal media information display position; and determine that the suspected abnormal media information display position is an abnormal media information display position if the second parameter is greater than a third threshold.

13. The server according to claim 8, further comprising:
a first punishment unit, configured to: after the determining unit determines that the terminal corresponding to the first terminal information is an abnormal terminal, mark a click behavior corresponding to the abnormal terminal on the media information display position as invalid.

14. The server according to claim 12, further comprising: a second punishment unit, configured to: after the determining unit determines that the suspected abnormal media information display position is an abnormal media information display position, mark a click behavior on the abnormal media information display position as invalid.

**15.** A nonvolatile storage medium, in which program instructions are stored, a processor performing the information processing method according to any one of claims 1 to 7 when executing the stored program instructions.

FIG. 1

| Obtain first log information in a first time period | 101 |

↓

| Obtain, based on the first log information, terminal information of a terminal on which a click behavior is performed on a media information display position | 102 |

↓

| Determine, based on the terminal information, regional information corresponding to the terminal, the regional information being used to indicate a region in which the terminal is located | 103 |

↓

| Determine whether the number of regions in which the terminal is located in a preset time range is greater than a first threshold according to the regional information | 104 |

↓

| Obtain, based on a determining result, first terminal information of which the number of corresponding regions is greater than the first threshold, and determining that a terminal corresponding to the first terminal information is an abnormal terminal | 105 |

FIG. 2

Obtain first log information in a first time period `/101`

↓

Obtain, based on the first log information, terminal information of a terminal on which a click behavior is performed on a media information display position `/102`

↓

Determine, based on the terminal information, regional information corresponding to the terminal `/103`

↓

Determine whether the number of regions in which the terminal is located in a preset time range is greater than a first threshold according to the regional information `/104`

↓

Obtain first terminal information of which the number of corresponding regions is greater than the first threshold, and determining an abnormal terminal `/105`

↓

Count the number of abnormal terminals and the total number of terminals corresponding to first media information display position `/106`

↓

Calculate a first ratio of the number of abnormal terminals to the total number of terminals `/107`

↓

Mark the first media information display position as a suspected abnormal media information display position if the first ratio is greater than a second threshold `/108`

Obtain second log information in a second time period `/201`

↓

Obtain a first number of clicks and a second number of clicks `/202`

↓

Calculate a second ratio of the first number of clicks to the second number of clicks `/203`

↓

Determine that the second media information display position is a suspected abnormal media information display position if the second ratio is less than the second threshold `/204`

Obtain location information of clicks on a third media information display position `/205`

↓

Calculate a first parameter according to the location information of clicks `/206`

↓

Determine that the third media information display position is a suspected abnormal media information display position if the first parameter does not fall within a preset threshold range `/207`

↓

Perform calculation according to the first ratio, the second ratio, the first parameter, and the weights respectively corresponding to the first ratio, the second ratio, and the first parameter to obtain a second parameter `/208`

↓

Determine that the suspected abnormal media information display position is an abnormal media information display position if the second parameter is greater than a third threshold `/209`

FIG. 3

FIG. 4

Horizontal axis-Click time   Longitudinal axis-The number of clicks

FIG. 5a

Horizontal axis-Click time   Longitudinal axis-The number of clicks

FIG. 5b

Horizontal axis-Day-to-neight ratio of advertisement positions
Longitudinal axis-The number of clicks on advertisement positions

FIG. 6

FIG. 7a

FIG. 7b

FIG. 7c

Horizontal axis-Percentage of abnormal terminals
Longitudinal axis-Number of advertisement positions

FIG. 8

FIG. 9

FIG. 10

```
┌─────────────────────────────┐
│   Data obtaining unit 31     │
└─────────────────────────────┘
              │
┌─────────────────────────────┐
│   Data analysis unit 32      │
└─────────────────────────────┘
              │
┌─────────────────────────────┐
│   Determining unit 33        │
└─────────────────────────────┘
```

FIG. 11

```
        ┌──────────────────┐
        │  Data obtaining  │
        │     unit 31      │
        └──────────────────┘
                 │
        ┌──────────────────┐
        │ Data analysis unit 32 │
        └──────────────────┘
                 │
┌──────────────┐ ┌──────────────────┐ ┌─ ─ ─ ─ ─ ─ ─ ─ ┐
│ Setting unit 34 ├─┤ Determining unit 33 ├─┤  First punishment  │
└──────────────┘ └──────────────────┘ │     unit 35      │
                 │                     └ ─ ─ ─ ─ ─ ─ ─ ─ ┘
        ┌─ ─ ─ ─ ─ ─ ─ ─ ┐
        │ Second punishment │
        │      unit 36      │
        └ ─ ─ ─ ─ ─ ─ ─ ─ ┘
```

FIG. 12

FIG. 13

FIG. 14

# INTERNATIONAL SEARCH REPORT

| International application No. |
| --- |
| PCT/CN2017/086126 |

## A. CLASSIFICATION OF SUBJECT MATTER

G06Q 30/02 (2012.01) i

According to International Patent Classification (IPC) or to both national classification and IPC

## B. FIELDS SEARCHED

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNABS, CNTXT, CNKI, DWPI, IEEE: click, fraud, cheat, IP, geography, region, location, number, threshold

## C. DOCUMENTS CONSIDERED TO BE RELEVANT

| Category* | Citation of document, with indication, where appropriate, of the relevant passages | Relevant to claim No. |
| --- | --- | --- |
| PX | CN 106097000 A (TENCENT TECHNOLOGY SHENZHEN CO., LTD.) 09 November 2016 (09.11.2016) the whole document | 1-15 |
| A | CN 103714057 A (BEIJING IZP NETWORK TECHNOLOGIES CO., LTD.) 09 April 2014 (09.04.2014) the whole document | 1-15 |
| A | US 2008201214 A1 (BELLSOUTH INTELLECTUAL PROPERTY CORPORATION) 21 August 2008 (21.08.2008) the whole document | 1-15 |
| A | US 2008281941 A1 (AT & T KNOWLEDGE VENTURES, LP) 13 November 2008 (13.11.2008) the whole document | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 August 2017 | 01 September 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Hui Telephone No. (86-10) 62089289 |
| --- | --- |

Form PCT/ISA /210 (second sheet) (July 2009)

## INTERNATIONAL SEARCH REPORT
Information on patent family members

| | International application No. |
|---|---|
| | PCT/CN2017/086126 |

| Patent Documents referred in the Report | Publication Date | Patent Family | Publication Date |
|---|---|---|---|
| CN 106097000 A | 09 November 2016 | None | |
| CN 103714057 A | 09 April 2014 | None | |
| US 2008201214 A1 | 21 August 2008 | US 8676637 B2 | 18 March 2014 |
| US 2008281941 A1 | 13 November 2008 | None | |

Form PCT/ISA /210 (patent family annex) (July 2009)

**REFERENCES CITED IN THE DESCRIPTION**

**Patent documents cited in the description**

- CN 201610389956